# EUROPEAN PATENT SPECIFICATION

(11) **EP 0 558 806 B1**
(45) Date of publication and mention of the grant of the patent: **11.09.1996**
(21) Application number: 92119885.9
(22) Date of filing: 23.11.1992
(51) Int. Cl.: F04B 39/00, F16C 3/22

(54) **Motor-compressor unit, in particular for refrigerators**
Verdichtermotor für Kühlgeräte
Moteur-compresseur pour réfrigérateurs

(30) Priority: 03.12.1991 IT MI911052
(43) Date of publication of application: 08.09.1993
(73) Proprietor: WHIRLPOOL EUROPE B.V., NL-5507 SK Veldhoven (NL)
(72) Inventor: Bianchi, Vittorio, c/o Whirlpool Italia s.r.l., I-21025 Comerio (VA) (IT); Maironi, Giuseppe, c/o Whirlpool Italia s.r.l., I-21025 Comerio (VA) (IT)
(74) Representative: Saconney, Piero

(56) References cited:
- EP-A- 0 491 222
- BE-A- 372 672
- GB-A- 2 103 759
- PATENT ABSTRACTS OF JAPAN vol. 6, no. 263 (M-181)(1141) 22 December 1982, & JP-A-57 157 079 (SANYO DENKI K.K.)

## Description

The invention relates to a motor-compressor unit according to the preamble of claim 1.

A motor-compressor unit of this type is known from document JP-A-57 157 079. In this known arrangement the drive shaft includes a tubular piece with two parts or sections which are coaxially aligned. A collar is obtained by deformation of the tubular piece between the two sections. An eccentric member, which is distinct from the tubular piece, has a tubular portion, constituting a crankpin, and a counterweight portion. The tubular portion of the eccentric member is fitted around one of the sections of the tubular piece and rests on the collar.

In the known arrangement the eccentric member is constituted by a metal piece of somewhat complex shape, which includes a counterweight and a crank pin and may be obtained by sintering.

An object of the invention is to provide a motor compressor unit with a drive shaft whose manufacturing costs are even lower than those of the drive shaft according to the prior art disclosed by document JP-A-57 157 079.

Another object of the present invention is to provide a motor-compressor unit in which the joint between the drive shaft and the relative counterweight can be made easily, quickly and reliably.

A further object is to provide a motor-compressor unit which is of lower cost than known constructions and in which special balancing operations are not required in joining the counterweight to the shaft.

A further object is to provide a motor-compressor unit which is of lower cost than known constructions and in which the counterweight joined to the shaft does not cooperate in any way in supporting the shaft on the compressor casing.

A further object is to provide a motor-compressor unit in which the drive shaft and its counterweight are of such shape as to facilitate their reliable joining.

According to the invention these objects are attained by a motor-compressor unit as claimed.

In a motor-compressor unit according to the invention the drive shaft is constituted by two pieces only.

One of the pieces is the tubular one, which may be obtained, with its two parts, which are eccentric with respect to one another, and its collar, by simple deformation of a straight tubular blank.

The other piece, which comprises the counterweight, may be obtained by bending a metal plate blank by an operation which is more economical than sintering.

In a drive shaft according to the invention a precise and repeatable positioning of the counterweight on the shaft is ensured by the cooperation between a portion of the counterweight and a flat surface of the collar. This cooperation ensures that the counterweight is perfectly perpendicular to the axis of the drive shaft body. Further, arranging the counterweight on the collar results in the counterweight being perfectly balanced about the shaft.

The assembly of the two pieces, the drive shaft and the counterweight, is obtained by a quick and simple operation consisting of the snap-engagement of the elastically deformable arms of the counterweight with a part of the shaft.

Further advantages of the invention will appear from the description which follows, made with reference to the accompanying drawings, which are provided by way of nonlimiting example and in which:

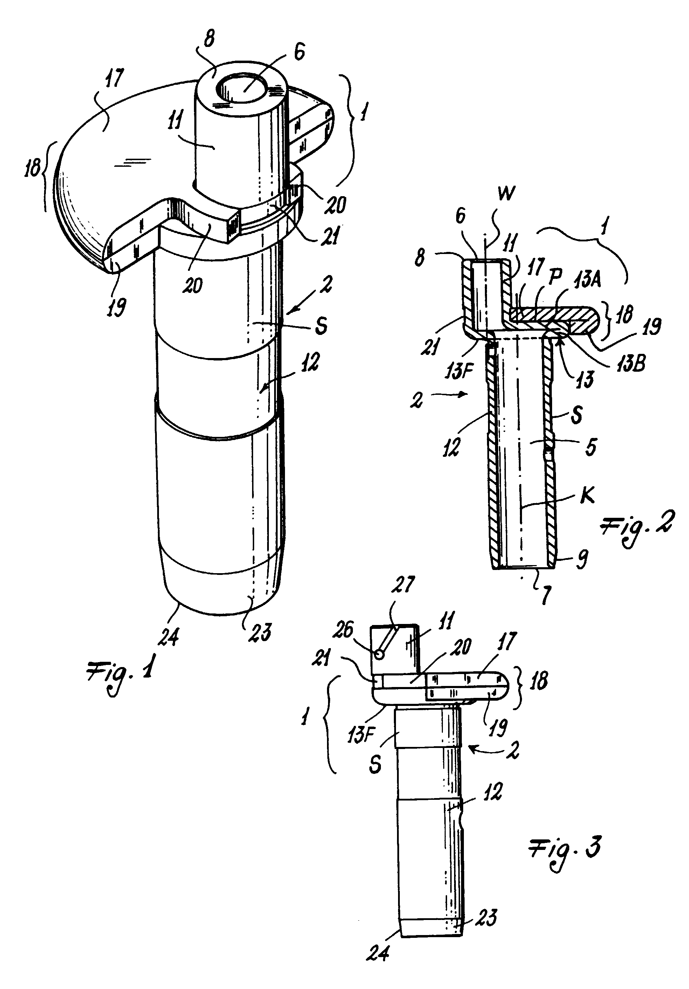

Figure 1 is a perspective view of a shaft for a motor-compressor unit in accordance with the invention;
Figure 2 is a longitudinal section through the shaft of Figure 1; and
Figure 3 is a side view of the shaft of Figure 1.

In said figures the reference numeral 1 indicates the drive shaft of a usual motor-compressor unit. This shaft has a body 2 with an outer surface S, said body 2 being hollow at 5. The cavity 5 opens, at 6 and 7, at the ends 8 and 9 of the shaft 1.

In proximity to the end 8, the shaft 1 is coupled to usual compression means (not shown) in known manner, via a part 11 having its axis W parallel to but displaced from the axis K of the remaining part 12 of the body 2.

This latter, between said parts 11 and 12, comprises a projecting collar 13 extending about at least part of the circumference of its surface S.

The collar 13 is formed by cold-forming the shaft 1, and comprises, in cross-section, two overlying flanges 13A and 13B defining a flat surface P on which one side 17 of a counterweight 18 rests.

This collar comprises a lower portion or surface 13F arranged to cooperate with a usual compressor casing (not shown) for supporting the shaft 1 on said casing.

The counterweight comprises a folded part 19 arranged to lie coplanar with and adjacent to the collar 13 and at least partly surrounding it.

Said side 17 comprises two projecting arched arms 20 which are at least partly elastically deformable (because of the elasticity of the metal defining the counterweight 18, formed from a blanked and folded metal plate) and are arranged to cooperate with an annular seat 21 provided in the part 11 of the body 2. This seat is adjacent to the collar 13 and enables the counterweight 18 to be easily arranged on the shaft 1 in a position perpendicular to the axis K or W of said shaft.

Finally, at the end 9 there is provided a cap 23 flared at its free end 24, to allow the shaft 1 to draw usual lubricant present in the enclosure (not shown) of the motor-compressor unit in which the shaft operates. The oil drawn by the cap 23 rises through the cavity 5 and passes through an aperture 26 provided in the part 11 of said body 2, and along a channel 27 provided in the surface of this part, to be distributed to the compression means for their lubrication.

The shaft construction requires little time. Starting from a hollow tube, it is deformed (preferably cold) to form the collar 13 with the part 13A lying in a plane perpendicular to the axis K or W of the body 2.

The counterweight 18 is constructed simultaneously from a blanked plate, by bending the plate back.

The counterweight is then mounted on the collar and the arms 20 are snap-inserted into the seat 21 to bring the part 19 of the counterweight into contact with the flange 138 of the collar 13.

Because of the configuration of the shaft 1, arranging the counterweight 18 on the collar 13 results in the counterweight being perfectly balanced about the shaft 1.

In any event, again because of said configuration it is no longer necessary (in contrast to known constructions) to ensure that the counterweight is perfectly perpendicular to the axis of the drive shaft body as the counterweight does not cooperate in any manner with the compressor casing for the purpose of supporting the shaft on this casing.

A shaft formed in accordance with the invention is therefore of speedy construction and simple preparation for use.

In addition, the modular form of its component pieces allows their easy storage and transportation. Once assembled, the resultant drive shaft has a reliability which is totally comparable with known constructions.

One embodiment of the invention has been described. However, other embodiments of the invention are possible (for example with the collar extending about the entire outer surface of the body), all of which fall within the scope of the present document.

## Claims

1. A motor-compressor unit, in particular for refrigerators, of the type comprising an electric motor rotating an output or drive shaft (1) having a lateral surface (S) and arranged to drive compression means for compressing a fluid, in particular a refrigerant fluid, there being provided a compressor casing relative to which the shaft is rotatable, and wherein the drive shaft (1) comprises a collar (13) projecting from said lateral surface (S) and extending about at least part of its circumference, said collar (13) acting as a support for a counterweight (18) having at least a part (17) resting on the collar (13), characterised in that the drive shaft (1) is a hollow tube which includes two parts (11, 12) having respective axes (K, W) which are parallel to each other but do not coincide, in that the collar (13) is arranged between said two parts (11, 12) and has a flat surface (P) which lies in a plane perpendicular to the axes (K, W) of said parts (13A, 13B) of the shaft (1), in that the counterweight (18) is a metal plate blanked and bent to define a first portion (17) which rests on said flat surface (P) of the collar (13) and a second portion (19) which is coplanar with the collar (13) and surrounds at least in part the collar (13), and in that the counterweight (18) comprises projecting arms (20) which are elastically deformable and are snap-engaged with one of said parts (11) of the shaft (1).

2. A motor-compressor unit according to claim 1, characterised in that said one part (11) of the shaft has an annular seat (21) and said projecting arms (20) are arched and cooperate with the annular seat (21).

3. A motor-compressor unit according to claim 1 or 2, characterised in that the collar (13) has a lower portion (13F) arranged to cooperate with the compressor casing in such a manner as to support the drive shaft (1) on the casing.

4. A motor-compressor unit according to any of claims 1 to 3, characterized in that the drive shaft (1) has a dip element (23) arranged to draw lubricant present in the enclosure of the motor-compressor unit and to feed the lubricant into a cavity (5) in the shaft (1), said cavity opening (6, 7) at the ends (8, 9) of said shaft (1).

5. A motor-compressor unit according to claim 4, characterised in that the shaft (1), in its part (11) which cooperates with the compression means, has an aperture (26) communicating with said cavity (5) and a surface channel (27) to distribute the lubricant to the compression means.

## Patentansprüche

1. Motorkompressor-Einheit, im besonderen für Kälteerzeugungsmaschinen, wobei die Motorkompressor-Einheit einen Elektromotor enthält, der eine Abtriebs- oder Antriebswelle (1) in Drehung versetzt, die eine Seitenfläche (S) besitzt und so aufgebaut ist, um ein Kompressoraggregat für das Komprimieren eines Fluids im besonderen eines Kältefluids, anzutreiben, wobei ein Kompressorgehäuse vorgesehen ist, relativ zu dem sich die Welle drehen kann, und wobei die Antriebswelle (1) einen Kragen (13) enthält, der von der Seitenfläche (S) vorspringt und um zumindest einen Teil des Umfangs verläuft, wobei der Kragen (13) als Halterung für ein Gegengewicht (18) dient, das zumindest einen Teil (17) besitzt, der auf dem Kragen (13) ruht, dadurch gekennzeichnet, daß die Antriebswelle (1) ein hohles Rohr ist, das zwei Teile (11, 12) aufweist, die entsprechende Achsen (K, W) besitzen, die zueinander parallel sind, jedoch nicht miteinander übereinstimmen, und daß der Kragen (13) zwischen den beiden Teilen (11, 12) angeordnet ist und eine ebene Fläche (P) besitzt, die in einer Ebene senkrecht zu den Achsen (K, W) dieser Teile (13A, 138) der Welle (1) liegt, daß das Gegengewicht (18) eine Metallplatte ist, die gestanzt und gebogen wird, um einen ersten Teil (17) zu bilden, der auf der ebenen Fläche (P) des Kragens (13) ruht, sowie einen zweiten Teil (19) zu bilden, der in einer Ebene mit dem Kragen (13) liegt und den Kragen (13) zumindest teilweise umschließt, und daß das Gegengewicht (18) vorspringende Arme (20) enthält, die elastisch verformbar sind und in einen der Teile (11) der Welle (1) eingeschnappt werden.

2. Motorkompressor-Einheit gemäß Anspruch 1, dadurch gekennzeichnet, daß der eine Teil (11) der Welle einen ringförmigen Sitz (21) besitzt, wobei die vorspringenden Arme (20) gebogen sind und mit dem ringförmigen Sitz (21) zusammenwirken.

3. Motorkompressor-Einheit gemäß Anspruch 1 oder 2, dadurch gekennzeichnet, daß der Kragen (13) einen unteren Teil (13F) besitzt, der so aufgebaut ist, um mit dem Kompressorgehäuse so zusammenzuwirken, daß die Antriebswelle (1) im Gehäuse gelagert wird.

4. Motorkompressor-Einheit gemäß irgendeinem der Ansprüche 1 bis 3, dadurch gekennzeichnet, daß die Antriebswelle (1) ein Eintauchelement (23) besitzt, das so aufgebaut ist, um ein Schmiermittel aufzunehmen, das im Gehäuse der Motorkompressor-Einheit vorhanden ist, und das Schmiermittel in einen Hohlraum (5) in der Welle (1) zu leiten, wobei sich der Hohlraum an den Enden (8, 9) der Welle (1) öffnet (6, 7).

5. Motorkompressor-Einheit gemäß Anspruch 4, dadurch gekennzeichnet, daß die Welle (1) in ihrem Teil (11), der mit dem Kompressoraggregat zusammenwirkt, eine Öffnung (26), die mit dem Hohlraum (5) in Verbindung steht, sowie einen Oberflächenkanal (27) besitzt, um das Schmiermittel zum Kompressoraggregat zu verteilen.

## Revendications

1. Groupe motocompresseur, en particulier pour des réfrigérateurs, du type comprenant un moteur électrique faisant tourner un arbre de sortie ou d'entraînement (1) ayant une surface latérale (S) et agencé pour entraîner un moyen de compression servant à comprimer un fluide, en particulier un fluide réfrigérant, ce moyen étant pourvu d'un carter de compresseur par rapport auquel l'arbre peut tourner, et dans lequel l'arbre d'entraînement (1) comprend une collerette (13) faisant saillie de ladite surface latérale (S) et s'étendant autour d'au moins une partie de sa circonférence, ladite collerette (13) agissant comme un support pour un contrepoids (18) dont au moins une portion (17) repose sur la collerette (13), caractérisé en ce que l'arbre d'entraînement (1) est un tube creux qui comprend deux parties (11, 12) dont les axes respectifs (K, W) sont parallèles l'un à l'autre mais ne coïncident pas, en ce que la collerette (13) est disposée entre les deux parties précitées (11, 12) et comporte une surface plate (P) qui se trouve dans un plan perpendiculaire aux axes (K, W) desdites parties (13A, 13B) de l'arbre (1), en ce que le contrepoids (18) est une plaque de métal découpée et pliée de manière à définir une première portion (17) qui repose sur ladite surface plate (P) de la collerette (13) et une seconde portion (19) qui se trouve dans le même plan que la collerette (13) et entoure au moins en partie la collerette (13), et en ce que le contrepoids,(18) comprend des bras saillants (20) qui peuvent être déformés élastiquement et sont en prise par encliquetage avec une première (11) desdites parties de l'arbre (1).

2. Groupe motocompresseur selon la revendication 1, caractérisé en ce que ladite première partie (11) de l'arbre comporte un siège annulaire (21) et lesdits bras saillants (20) sont arqués et coopèrent avec le siège annulaire (21).

3. Groupe motocompresseur selon la revendication 1 ou 2, caractérisé en ce que la collerette (13) comporte une portion inférieure (13F) agencée pour coopérer avec le carter du compresseur de manière à supporter l'arbre d'entraînement (1) sur le carter.

4. Groupe motocompresseur selon l'une quelconque des revendications 1 à 3, caractérisé en ce que l'arbre d'entraînement (1) comporte un élément plongeur (23) agencé pour aspirer du lubrifiant présent dans l'enceinte du groupe motocompresseur et pour envoyer le lubrifiant dans une cavité (5) de l'arbre (1), ladite cavité débouchant (6, 7) aux extrémités (8, 9) dudit arbre (1).

5. Groupe motocompresseur selon la revendication 4, caractérisé en ce que l'arbre (1), dans sa partie (11) qui coopère avec le moyen de compression, comporte une ouverture (26) communiquant avec ladite cavité (5) et une rainure superficielle (27) pour distribuer le lubrifiant au moyen de compression.
